Europäisches Patentamt

**European Patent Office**

Office européen des brevets

(19)

(11) Numéro de publication: **0 080 423**
**A1**

(12) ## DEMANDE DE BREVET EUROPEEN

(21) Numéro de dépôt: **82420157.8**

(22) Date de dépôt: **18.11.82**

(51) Int. Cl.³: **B 61 B 12/08**

(30) Priorité: **19.11.81 FR 8121845**

(43) Date de publication de la demande: **01.06.83**
**Bulletin 83/22**

(84) Etats contractants désignés: **AT CH DE FR IT LI**

(71) Demandeur: **Andrei, José Jacques, Immeuble Debussy Parc de Chalin 8 chemin Louis Chirpaz, F-69130 Ecully (FR)**

(72) Inventeur: **Andrei, José Jacques, Immeuble Debussy Parc de Chalin 8 chemin Louis Chirpaz, F-69130 Ecully (FR)**

(74) Mandataire: **Laurent, Michel et al, 20 rue Louis Chirpaz Boîte postale no. 32, F-69131 Ecully Cedex (FR)**

(54) **Appareil autonome de graissage de câbles mobiles.**

(57) Dispositif autonome permettant d'assurer le graissage de câbles mobiles (2).

Ce dispositif est constitué essentiellement d'un ensemble (3) sous forme de caisson, destiné à être disposé autour de câble (2), ce caisson comportant sur ses faces avant (4) et arrière (5) des orifices pour le passage dudit câble et renfermant des moyens permettant de délivrer le lubrifiant approprié à la surface du câble.

Selon l'invention, des moyens permettant d'assurer la lubrification sont constitués essentiellement d'une pompe aspirante-refoulante (11) commandée par une roue (12) dont la rotation est provoqué directement par le déplacement relatif entre ledit ensemble de graissage et le câble (2) à traiter, la répartition de l'huile amenée par la pompe étant obtenue au moyen de buses ou de galets rotatifs prenant appui à la périphérie du câble.

## DISPOSITIF AUTONOME PERMETTANT D'ASSURER LE GRAISSAGE DE CABLES MOBILES.

La présente invention concerne un dispositif perfectionné permettant d'assurer le graissage de câbles métalliques mobiles, exposés aux intempéries et qui sont utilisés, par exemple, pour actionner des remonte-pentes, des téléskis, des télésièges ou le déplacement de bennes servant à des transports de toute nature (objets, matériaux ou personnes...).

Parmi les solutions proposées à ce jour pour réaliser le graissage (ou lubrification) des câbles utilisés dans les applications précitées, graissage qui est effectué non pas continuellement, mais de façon périodique, par exemple une ou deux fois par an, la plus couramment employée consiste à effectuer cette opération à la main.

Il a certes été proposé des installations permettant d'effectuer cette opération mais tous les appareils existant dans ce domaine sont tributaires d'un système pneumatique ou électrique annexe, servant à assurer l'acheminement du lubrifiant depuis un réservoir de stockage jusqu'aux éléments (buses par exemple) assurant le dépôt du lubrifiant sur le câble. De tels appareils sont lourds, coûteux et difficiles à manipuler. Par ailleurs, ils ne permettent pas de nettoyer le câble ni d'assurer une répartition homogène de la graisse sur toute la surface circulaire dudit câble. De plus, ils entraînent très souvent des risques de projection et de gaspillage.

Or on a trouvé, et c'est ce qui fait l'objet de la présente invention, un dispositif simple, efficace, facilement transportable et adaptable sur les différentes installations à graisser qui surmonte les inconvénients des solutions antérieures.

Par ailleurs, le dispositif selon l'invention peut être utilisé non seulement pour les câbles sur lesquels

0080423

- 2 -

les éléments dont ils servent à assurer le déplacement sont montés de manière débrayable mais également pour des câbles sur lesquels lesdits éléments sont fixés de façon permanente.

Enfin, le dispositif conforme à l'invention est parfaitement autonome et fonctionne sans avoir à utiliser de sources de puissance externe (compresseur, air comprimé...) et peut être adapté, facilement, à n'importe quel niveau du trajet du câble.

D'une manière générale, l'invention concerne donc un dispositif permettant d'assurer de manière autonome le graissage de câbles mobiles, ce dispositif étant constitué essentiellement d'un ensemble sous forme de caisson destiné à être disposé autour du câble, cedit caisson comportant sur ses faces avant et arrière des orifices pour le passage desdits câbles et renfermant des moyens permettant de délivrer un lubrifiant approprié à la surface du câble et se caractérise par le fait que les moyens permettant d'assurer la lubrification sont constitués essentiellement d'une pompe aspirante-refoulante commandée par une roue dont la rotation est provoquée directement par le déplacement relatif entre ledit ensemble de graissage et le câble à traiter.

Selon l'invention, les moyens pour répartir le lubrifiant délivré par la pompe à la surface du câble à l'intérieur du caisson peuvent être constitués soit par des buses, par exemple au nombre de trois, disposés à la sortie de la pompe, soit, éventuellement, au moyen de galets rotatifs, également au nombre de trois par exemple, qui prennent appui à la périphérie du câble, sont soumis à l'action de ressorts assurant une pression, lesdits galets rotatifs étant arrosés de lubrifiant.

De plus, dans un mode préférentiel de mise en oeuvre de l'invention, les orifices d'entrée et de sortie du câble à l'intérieur du caisson précité, sont associés à des moyens permettant d'assurer un nettoyage de la surface dudit câble à l'entrée ainsi que la récupération à la sortie de l'excédent de lubrifiant déposé. Ces moyens peuvent être constitués, par exemple, par deux brosses, constituées de fils métalliques (bronze ou acier inoxydable).

Bien entendu, d'une part, la pompe est reliée par l'intermédiaire d'un conduit approprié à une source de lubrifiant et, un conduit de récupération de l'excès de lubrifiant est prévu à la base du caisson, de manière à avoir un circuit continu du produit et éviter toute perte.

Enfin, le caisson est constitué de deux parties élémentaires articulées l'une par rapport à l'autre et comporte des moyens permettant d'assurer l'immobilisation de ces parties après mise en place du dispositif autour du câble. Eventuellement, ce caisson peut être conçu de manière à comporter une ouverture latérale permettant le passage de supports qui sont fixés de manière permanente aux câbles.

L'invention et les avantages qu'elle apporte seront cependant mieux compris grâce aux exemples de réalisation donnés ci-après à titre indicatif mais non limitatif et qui sont illustrés par les schémas annexés dans lesquels :

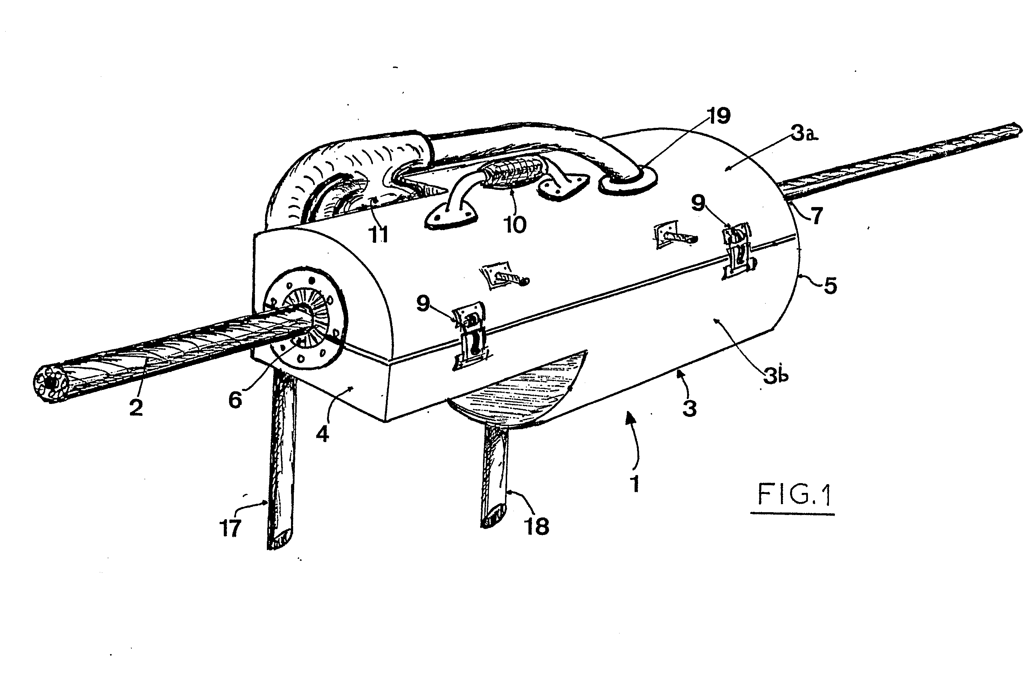

- la figure 1 est une vue en perspective, schématique, d'un mode de réalisation d'un dispositif conforme à l'invention, disposé sur un câble à graisser ;

- la figure 2 est une vue en bout, partiellement éclatée, montrant la face d'entrée d'un tel dispositif ;

- la figure 3 est une vue en bout montrant la face de sortie ;

- la figure 4 est une coupe longitudinale du dispositif illustré par les figures 1 à 3 ;

- la figure 5 est une coupe transversale selon l'axe XX de la figure 4 montrant plus en détail un système permettant d'assurer la répartition du lubrifiant autour du câble ;

- la figure 6 est une vue agrandie de la partie cerclée de la figure 4 montrant plus en détail la manière dont est réparti le lubrifiant à la surface du câble ;

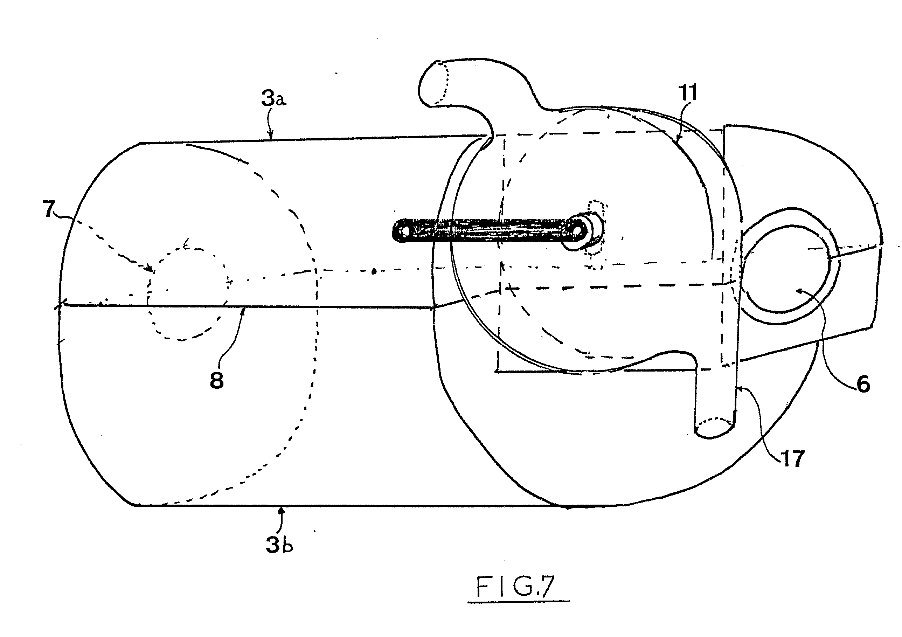

- la figure 7 est une vue schématique, en perspective, montrant plus particulièrement une des manières dont est
fixée la pompe permettant l'amenée du lubrifiant sur
le dispositif conforme à l'invention ;

- la figure 8 est une vue schématique, également
en perspective, montrant une variante selon l'invention,
variante selon laquelle le lubrifiant est déposé à la
surface du câble au moyen de buses ;

- la figure 9 est une vue schématique d'une variante, d'un
dispositif selon l'invention, permettant d'assurer le graissage
d'un câble sur lequel sont fixés de manière permanente
les éléments (perches par exemple) que doit déplacer
ce câble ;

- la figure 10 illustre également en perspective
une variante conforme à l'invention dans laquelle le maintien
en position axiale du dispositif de graissage autonome est assuré
par des systèmes à roulettes disposés en amont et en aval
dudit dispositif.

Si l'on se reporte aux schémas annexés, le dispositif selon l'invention, désigné par la référence générale
(1) et qui permet d'assurer le graissage d'un câble (2)
mobile, est constitué essentiellement par un caisson
(3) disposé autour du câble (2), fixé par exemple à un
pylone servant d'élément de maintien et de guidage pour
ledit câble. Ce caisson est traversé par le câble (2)
et comporte donc, sur sa face avant (4) et sur sa face
arrière (5) des orifices (6-7) permettant de laisser
passer le câble. A ces orifices, sont associées
des brosses constituées de poils métalliques, en bronze ou
acier inoxydable par exemple, ces brosses permettant d'une part de nettoyer le câble et, d'autre part, de récupérer l'excédent
de lubrifiant qui aurait pû être déposé.

Ce caisson est de préférence constitué de deux parties ( 3a-3b) articulées l'une par rapport à l'autre au moyen d'une charnière latérale (8). Des moyens de fermeture (9), constitués par exemple par des systèmes à crochets sont prévus sur l'autre côté du caisson. De plus, une poignée (10) est prévue à la partie supérieure (3a) afin de faciliter le transport de l'ensemble.

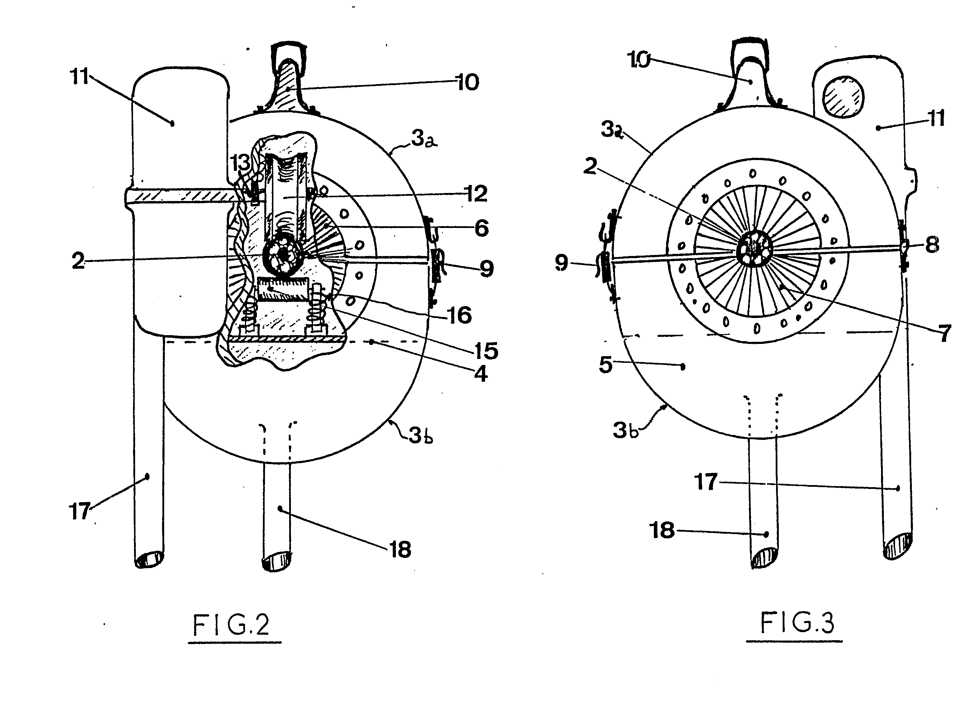

Conformément à l'invention, le caisson (3) renferme des moyens permettant de distribuer un lubrifiant sur le câble (2) lors de son passage au travers du caisson. Ces moyens de distribution de lubrifiant sont constitués par une pompe aspirante-refoulante (11) qui est commandée par une roue (12), solidaire de l'axe (13) de la pompe (voir figure 2).

Cette pompe est une pompe conventionnelle et ne sera pas décrite en détail dans la suite de la description. La roue (12) présente de préférence à sa périphérie une gorge (14) qui prend appui à la surface du câble (2). La pression sur le câble (2) est assurée par un rouleau (15) soumis à l'action de ressorts (16). La pompe (11) est reliée par l'intermédiaire d'un conduit (17) à une réserve de lubrifiant (non représentée sur les schémas annexés) et un conduit (18) d'évacuation de l'excès de lubrifiant déposé sur le câble (2) est prévu à la partie inférieure (3b) de l'enceinte (3). Afin de faciliter la concentration de l'excès de lubrifiant à la partie inférieure (3b), cette partie se présente de préférence sous la forme d'un carter surbaissé par rapport à l'ensemble. Le lubrifiant appelé par la pompe (11) est injecté à l'intérieur de l'enceinte (3) par l'intermédiaire du conduit de sortie (19).

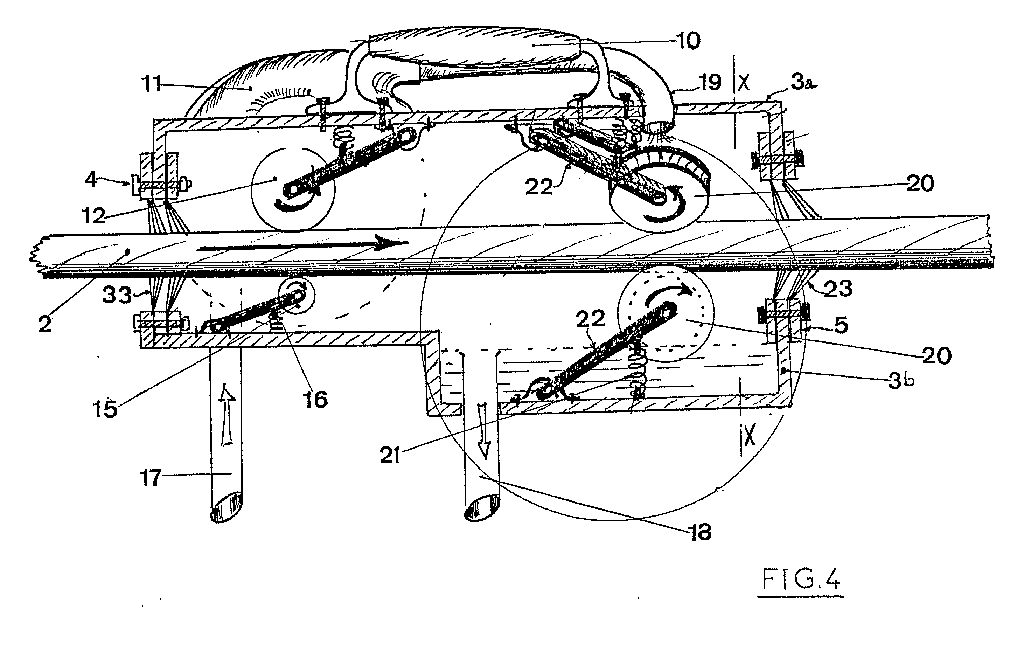

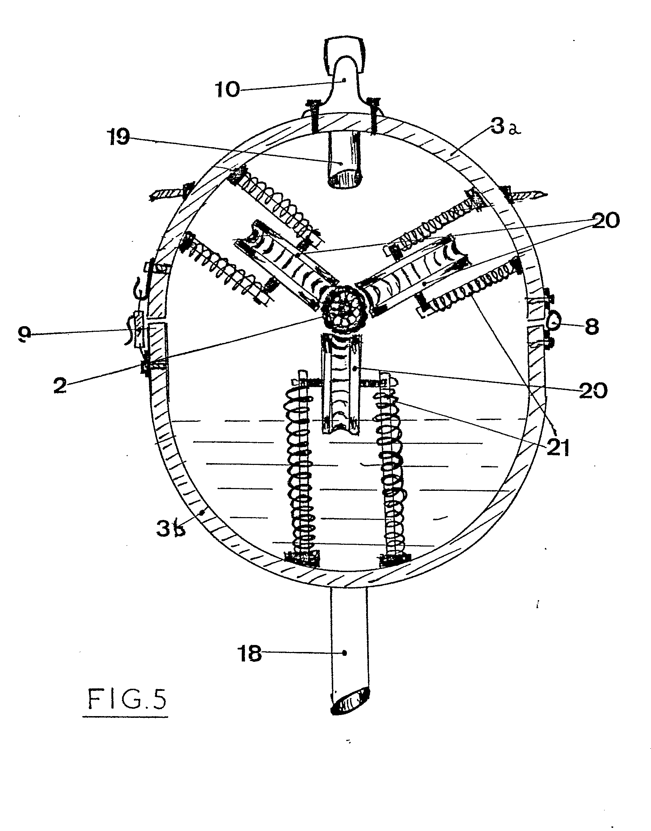

Dans l'exemple de réalisation illustré plus particulièrement aux figures 4, 5 et 6, la répartition du lubrifiant autour du câble (2) est obtenue au moyen d'un ensemble de roulettes, désigné par la même référence (20), ces roulettes, au nombre de trois dans le cas présent, étant disposées à 120° les unes des autres. Ces trois roulettes présentent également une gorge périphérique permettant d'assurer un appui correct. autour du câble (2). De plus, elles sont soumises à l'action de ressorts (21) reliés à des biellettes (22) montées pivotantes à l'intérieur de l'enceinte. L'inclinaison des roulettes supérieures (20) est de préférence de 60° de part et d'autre part rapport à la verticale, ces roulettes adhérant sur environ les deux tiers supérieurs du câble en fonction de son diamètre.

Le lubrifiant est déversé par l'intermédiaire du conduit (19) sur les roulettes supérieures.

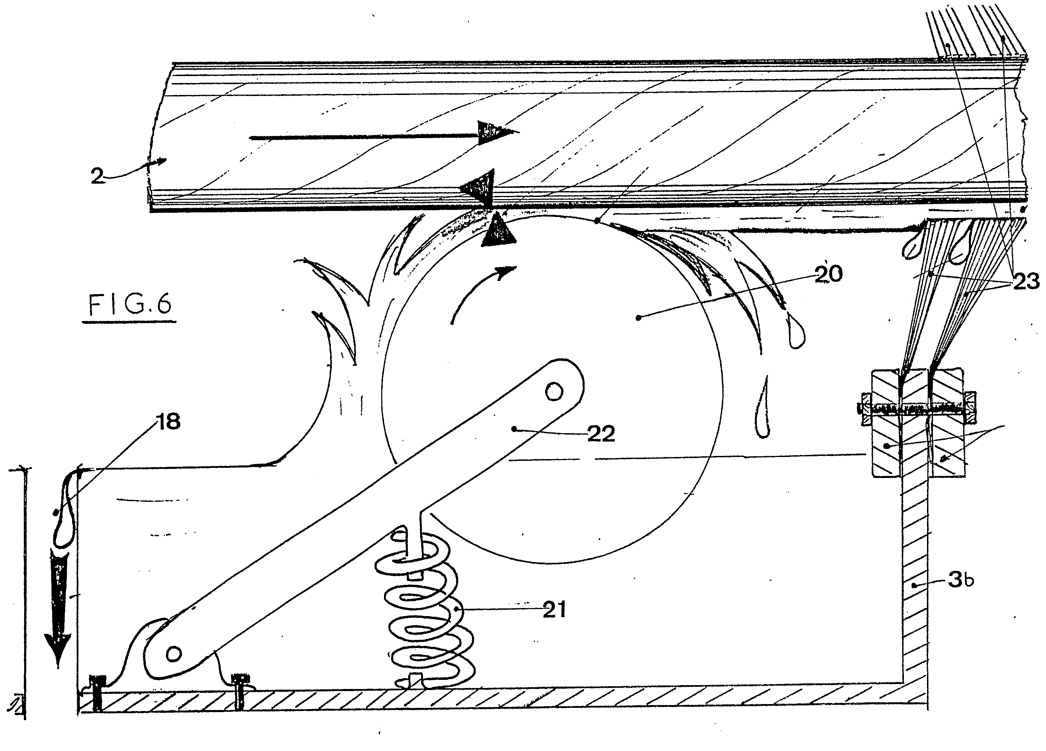

La roulette inférieure, entraîne quant à elle (voir figure 6) le lubrifiant qui s'accumule à la base de l'enceinte dans la partie formant carter. Cette figure 6 montre plus en détail la manière dont s'effectue la projection d'huile à la périphérie du câble au moyen de cette roulette inférieure. Les biellettes (22) et ressorts (21) sont réglés de telle manière que les roulettes (20) agissent de préférence sur le câble (2) perpendiculairement à l'axe de ce câble et en exerçant des pressions identiques.

Dans ce mode de réalisation, le lubrifiant amené par le conduit (19) est déversé sur les roulettes supérieures (20) et s'écoule sur le câble puis dans le carter de la partie inférieure (3b). La hauteur du conduit d'évacuation (18) à l'intérieur de ce carter est telle qu'une certaine quantité de lubrifiant s'accumule dans la zone inférieure (voir figure 6). L'excès de lubrifiant s'écoule par ce conduit (18) pour retourner au container d'alimentation. De cette sorte, on obtient un graissage parfait du câble par les roulettes rotatives ainsi qu'une pénétration du lubrifiant jusqu'à l'âme du câble du fait de la pression exercée par les roulettes (20).

Dans cet exemple de réalisation, ainsi que cela ressort clairement de la figure 4, les faces d'entrée et de sortie de l'enceinte sont équipées de brosses métalliques (33-23). De manière simple, ces brosses sont formées de poils de bronze ou d'acier inoxydable maintenus serrés au moyen de flasques contre les faces d'entrée et de sortie de l'enceinte. Ces brosses (33-23) permettent d'une part, d'assurer un nettoyage du câble à l'entrée (brosse 33) favorisant un bon graissage et, d'autre part, permettent d'éliminer (brosse (23)) l'excès de lubrifiant qui aurait pû être déposé sur le câble à sa sortie.

Ainsi que cela ressort de la figure 4, dans cet exemple de réalisation, les brosses (33-23) sont formées de deux brosses élémentaires disposées de part et d'autre des extrémités de l'enceinte.

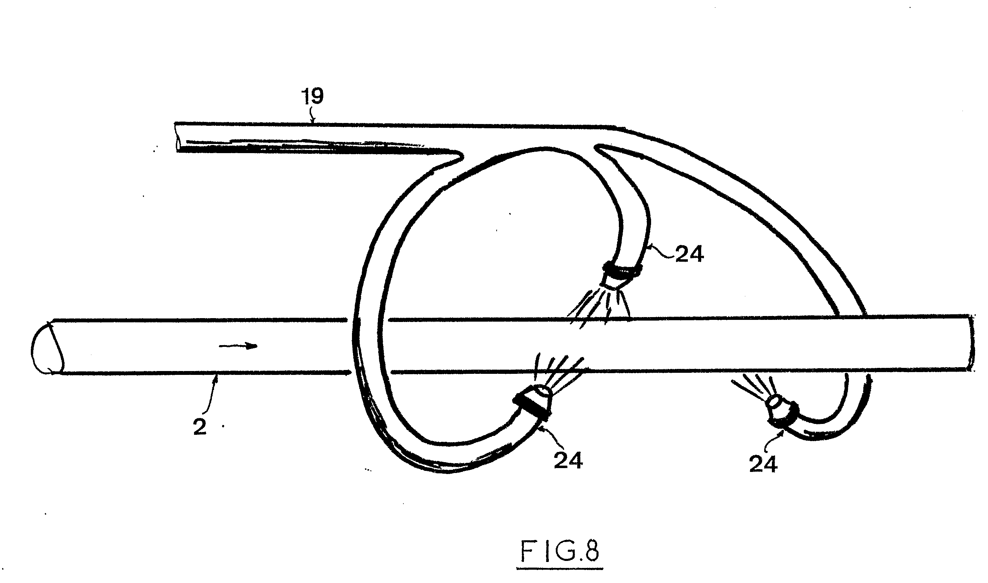

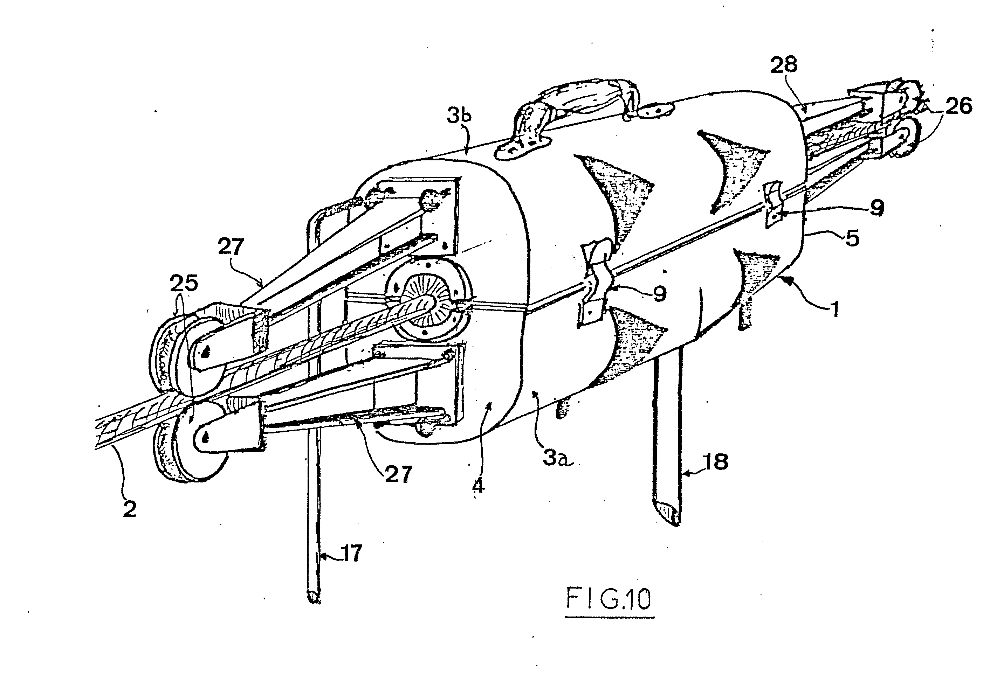

Bien entendu, le dépôt de lubrifiant autour du câble peut être réalisé par tout autre moyen que des roulettes tel que décrit précédemment. Ainsi, à la figure 8, le dépôt de lubrifiant est obtenu au moyen de buses, désignées par la même référence (24). Ces buses (24) sont reliées au conduit (19) d'amenée de lubrifiant. Elles sont disposées à 120° les unes des autres pour bien répartir le lubrifiant. Dans un tel cas, le maintien de l'appareil selon l'invention autour du câble peut être assuré de la manière illustrée à la figure 10, c'est-à-dire au moyen de deux paires de roulettes (25-26) solidaires respectivement, par l'intermédiaire d'éléments de liaison (27-28) de la face avant et de la face arrière de l'enceinte.

Si dans les exemples décrits précédemment, le dispositif selon l'invention est adapté pour le graissage de câbles comportant des éléments débrayables (par exemple perches de téléskis), l'invention peut également être utilisée pour graisser des câbles sur lesquels sont fixés de manière permanentes des éléments à transporter. Un tel exemple de réalisation est illustré par la

0080423

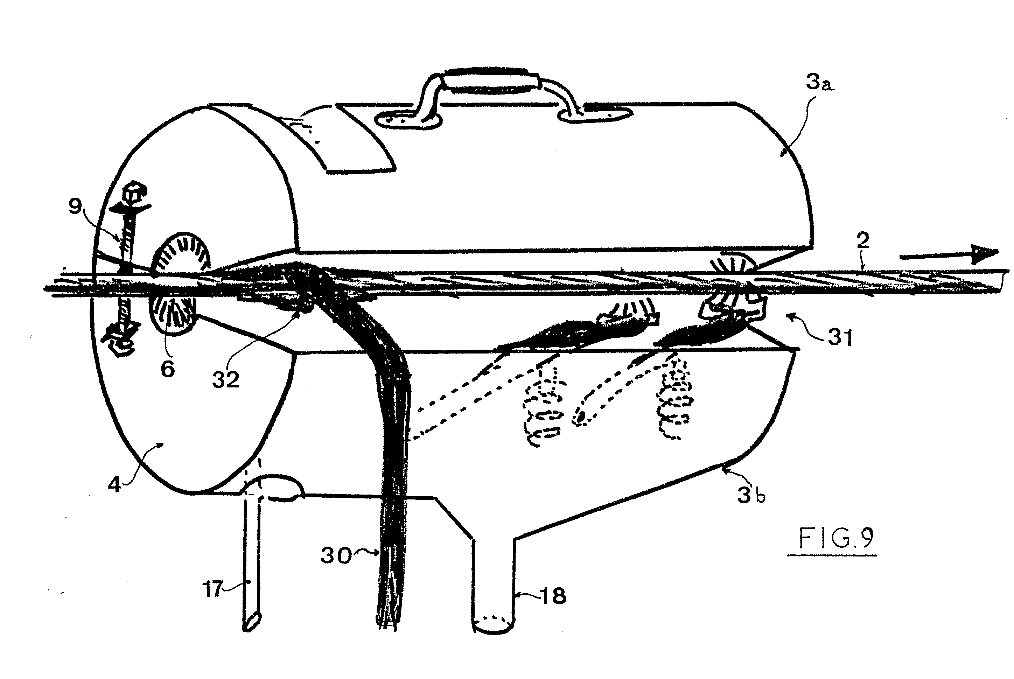

figure 9 où le câble (2) supporte de manière permanente l'extrémité d'une perche (30). Dans ce mode de réalisation, la seule différence par rapport aux exemples décrits précédemment réside dans le fait que l'enceinte (3) présente une ouverture latérale (31) laissant passer les extrémités (32) des perches (30). Cette ouverture (31) aura par exemple la forme d'un V couché. Dans ce cas, l'enceinte est également constituée de deux parties élémentaires (3a-3b), articulées l'une par rapport à l'autre. Les moyens permettant d'immobiliser ces deux parties élémentaires (3a-3b) après mise en place du dispositif de graissage autour du câble (2) sont, dans le cas présent, disposés sur les faces d'entrée (4) et de sortie (5) de manière à laisser passer les extrémités des perches (30).

Il est donc possible d'avoir un ensemble autonome permettant d'assurer le graissage de câbles mobiles, cet ensemble permettant d'aspirer le lubrifiant à l'aide d'une pompe mue par le câble lui-même et ce, sans l'intervention d'aucun matériel de compression lourd ni d'électricité, le graissage étant effectué profondément et sous pression jusqu'à l'âme du câble et ce, de manière parfaitement homogène sur toute la périphérie. De plus, l'appareil selon l'invention permet également de nettoyer le câble à l'entrée et à la sortie.

Un tel appareil, d'une très grande simplicité, est facilement transportable et manipulable.

Bien entendu, l'invention n'est pas limitée aux exemples de réalisation donnés précédemment, mais elle en couvre toutes les variantes réalisées dans le même esprit.

0080423

## REVENDICATIONS

1/ Dispositif permettant d'assurer le graissage de câbles mobiles (2) constitué essentiellement d'un ensemble (3) sous forme de caisson destiné à être disposé autour du câble (2), ledit caisson comportant sur ses faces avant (4) et arrière (5) des orifices pour le passage du câble et renfermant des moyens permettant de délivrer le lubrifiant approprié à la surface du câble, caractérisé par le fait que les moyens permettant d'assurer la lubrification sont constitués essentiellement d'une pompe aspirante-refoulante (11) commandée par une roue (12) dont la rotation est provoquée directement par le déplacement relatif entre ledit ensemble de graissage et le câble (2) à traiter rendant ainsi l'appareil autonome.

2/ Dispositif selon la revendication 1, caractérisé par le fait que les moyens permettant de répartir le lubrifiant sur la surface du câble (2) à l'intérieur du caisson (3), sont constitués par des buses.

3/ Dispositif selon la revendication 1, caractérisé par le fait que les moyens permettant de répartir le lubrifiant à la surface du câble (2) sont constitués par des galets rotatifs (20) qui prennent appui à la périphérie du câble (2).

4/ Dispositif selon l'une des revendications 1 à 3, caractérisé par le fait que les orifices d'entrée (6) et de sortie (7) du câble à l'intérieur du caisson (3) comportent des moyens permettant d'assurer un nettoyage de la surface dudit câble ainsi que la récupération de l'excédent de lubrifiant déposé.

5/ Dispositif selon la revendication 4, caractérisé par le fait que les moyens permettant d'assurer le nettoyage de la surface du câble (2) ainsi que la récupération de l'excédent de lubrifiant déposé sont constitués par des brosses formées de fils métalliques.

6/ Dispositif selon l'une des revendications 1 à 5, caractérisé par le fait que le caisson (3) est constitué de deux parties élémentaires (3a-3b) articulées l'une par rapport à l'autre et comporte des moyens permettant d'assurer l'immobilisation de ces parties après mise en place du dispositif autour du câble.

7/ Dispositif selon l'une des revendications 1 à 6, caractérisé par le fait que le caisson (3) comporte une ouverture latérale (31) permettant le passage de supports (30) fixés de manière permanente au câble (2).

FIG.1

FIG.3

FIG.2

FIG.4

- 3 -

0080423

0080423

FIG.5

FIG.6

FIG.7

0080423

FIG.8

FIG.9

FIG.10

**Office européen des brevets**

## RAPPORT DE RECHERCHE EUROPEENNE

EP 82 42 0157

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 61 B 12/08 |
| Y | DE-C- 144 245 (GALETZ) *En entier* | 1 | |
| | --- | | |
| Y | DE-C- 227 263 (POHLIG) *Page 1, lignes 14-16,52 - page 2, ligne 14; figures 1,2* | 1,2 | |
| | --- | | |
| A | CH-A- 301 630 (FREY) *Page 1, ligne 52 - page 2, ligne 47; figures 1-3* | 3-5 | |
| | --- | | |
| A | CH-A- 316 318 (HARTMANN, GÜNTENSPERGER) *En entier* | 5-7 | |
| | --- | | |
| A,P | DE-A-3 022 144 (HOEVRING) *Revendication 1; figures 1,2* | 1,6,7 | **DOMAINES TECHNIQUES RECHERCHES (Int. Cl. ³)** |
| | ----- | | B 61 B<br>B 66 B<br>F 16 N |

Le présent rapport de recherche a été établi pour toutes les revendications

| Lieu de la recherche | Date d'achèvement de la recherche | Examinateur |
|---|---|---|
| LA HAYE | 15-02-1983 | GROTZINGER J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03. 82